# EUROPÄISCHE PATENTANMELDUNG

(11) **EP 3 996 216 A1**
(43) Veröffentlichungstag der Anmeldung: **11.05.2022**
(21) Anmeldenummer: 20206761.7
(22) Anmeldetag: 10.11.2020
(51) Int. Cl.: H01R 25/14, H01R 25/16, H02G 5/00, H01R 11/01

(54) **TOLERANZAUSGLEICHENDES KONTAKTIERUNGSELEMENT ZUR KONTAKTIERUNG VON STROMSCHIENEN**

(71) Anmelder: Siemens Aktiengesellschaft, 80333 München (DE)
(72) Erfinder: Roth, Markus, 51371 Leverkusen (DE); Althoff, Sebastian, 40789 Monheim am Rhein (DE); Bertels, Frank, 50765 Köln (DE)

(57) **Zusammenfassung**

Die Erfindung betrifft ein toleranzausgleichendes Kontaktierungselement, um Stromschienen miteinander zu kontaktieren, aufweisend einen längsgestreckten Körper mit einer vollausgeformten Ausnehmung, eine Stromschiene in Form eines toleranzausgleichenden Kontaktierungselements, um Stromschienen miteinander zu kontaktieren, sowie eine Anordnung mit einem toleranzausgleichenden Kontaktierungselement, um Stromschienen miteinander zu kontaktieren.

## Beschreibung

Die Erfindung betrifft ein toleranzausgleichendes Kontaktierungselement, um Stromschienen miteinander zu kontaktieren, aufweisend einen längsgestreckten Körper mit einer vollausgeformten Ausnehmung, eine Stromschiene in Form eines toleranzausgleichenden Kontaktierungselements, um Stromschienen miteinander zu kontaktieren, sowie eine Anordnung mit einem toleranzausgleichenden Kontaktierungselement, um Stromschienen miteinander zu kontaktieren.

Stromschienen werden zum Verbinden von elektrischen Leitern und/oder Baugruppen verwendet. An den Verbindungsstellen der Stromschienen sowie zu den Leitern und/oder Baugruppen muss der elektrische Kontakt gewährleistet sein. Das Problem besteht hierbei darin, dass die für die Montage der Stromschienenanbindung benötigten Ausgleichsstücke, wenn zwei Stromschienen-Plattformen nicht direkt miteinander kontaktiert werden können, erst vor Ort an der Baustelle angefertigt werden können. Dabei müssen meist mehrdimensionale Fertigungstoleranzen innerhalb eines sehr begrenzten Bauraums ausgeglichen werden.

Demgemäß besteht die Aufgabe der vorliegenden Erfindung darin, ein einfach zu montierendes toleranzausgleichendes Kontaktierungselement zur Kontaktierung von Stromschienen zu schaffen sowie eine Stromschiene in Form eines toleranzausgleichenden Kontaktierungselements und eine Anordnung mit einem toleranzausgleichenden Kontaktierungselement anzugeben.

Diese Aufgabe wird erfindungsgemäß durch ein toleranzausgleichendes Kontaktierungselement, um Stromschienen miteinander zu kontaktieren, nach Anspruch 1, durch eine Stromschiene in Form eines toleranzausgleichenden Kontaktierungselements nach Anspruch 9 sowie durch eine Anordnung mit einem toleranzausgleichenden Kontaktierungselement nach Anspruch 10 gelöst. Vorteilhafte Aus- und Weiterbildungen, welche einzeln oder in Kombination miteinander eingesetzt werden können, sind der Gegenstand der abhängigen Ansprüche. Die in den abhängigen Ansprüchen 2 bis 8 aufgeführten Merkmalskombinationen sollen ebenso für die Stromschiene in Form eines toleranzausgleichenden Kontaktierungselements nach Anspruch 9 sowie für die Anordnung mit einem toleranzausgleichenden Kontaktierungselement nach Anspruch 10 zu beanspruchen sein.

Erfindungsgemäß wird diese Aufgabe gelöst durch ein toleranzausgleichendes Kontaktierungselement, um Stromschienen miteinander zu kontaktieren, aufweisend einen längsgestreckten Körper mit einer vollausgeformten Ausnehmung. Die vollausgeformte Ausnehmung ist in einer Ebene ausgebildet. Diese Ebene ist durch die Ebene des längsgestreckten Körpers vorgegeben.

Der Kern der Erfindung besteht darin, dass das toleranzausgleichende Kontaktierungselement durch Verwendung einer vollausgeformten Ausnehmung, also einer Ausnehmung, welche komplett vom Material des langgestreckten Körpers umgeben ist und eine vollständig ausgebildete Umrandung aufweist, also nicht sacklochartig ausgeführt ist, die Toleranz ermöglicht, um an beliebigen Positionen innerhalb der vollausgeformten Ausnehmung eine Anbindung an Stromschienen zu schaffen. Dazu ist die vollausgeformte Ausnehmung vorzugsweise als Langloch ausgebildet und dient so als Führungsschiene, auf welcher eine Klemme frei verschiebbar zu bewegen ist. Die vollausgeformte Ausnehmung kann in ihrer Ausbildung sowohl parallel zu einer Längskante angelegt sein als auch nicht parallel, so dass die anzuschließenden Stromschienen in einer anderen Höhe bzw. in einer anderen Ebene angeordnet sind als die an den Endbereichen des längsgestreckten Körpers kontaktierten. Für den Fall einer nicht parallelen Ausbildung kann dann ggf. ein zusätzliches Fixierungselement für die sichere Kontaktierung und Verbindung der Stromschienen verwendet werden.

Das erfindungsgemäße toleranzausgleichende Kontaktierungselement ermöglicht einen Toleranzausgleich bei speziellen Konturen im Bereich der Stromschienenenden. Zudem kann ein Toleranzausgleich an Verbindungsstellen geschaffen werden, welche die Verwendung von speziellen, maßangefertigten Zwischenstücken erfordern würde.

Der Vorteil des toleranzausgleichenden Kontaktierungselements besteht darin, dass der Montageaufwand für die Installation von miteinander zu verbindenden Stromschienen-Plattformen reduziert wird und mittels einfacher Fertigungsschritte ein mehrdimensional ausgebildeterer Toleranzbereich innerhalb einer Stromschiene implementiert wird.

Eine vorteilhafte Ausführungsform des erfindungsgemäßen toleranzausgleichenden Kontaktierungselements kann derart ausgebildet sein, dass die vollausgeformte Ausnehmung als einfaches Langloch oder als Langloch mit vertikalen und/oder horizontalen Durchgriffsöffnungen ausgebildet ist. Die erfindungsgemäßen Ausführungsformen umfassen in jedem Fall eine einzige Ausnehmung, welche vollausgeformt im längsgestreckten Körper ausgebildet ist und entweder als einfaches Langloch oder als Langloch mit Erweiterungen im horizontalen und/oder vertikalen Bereich vorliegt.

Es entspricht einer speziellen Ausführungsform des erfindungsgemäßen toleranzausgleichenden Kontaktierungselements, dass in der vollausgeformten Ausnehmung eine Klemme für die Fixierung von Stromschienen frei verschiebbar angeordnet ist.

Eine Fortführung des Konzepts für das erfindungsgemäße toleranzausgleichende Kontaktierungselement kann darin bestehen, dass der längsgestreckte Körper als Stromschienenabschnitt ausgebildet ist.

Eine Erweiterung einer speziellen Ausgestaltung des erfindungsgemäßen Konzepts für das toleranzausgleichende Kontaktierungselement kann vorsehen, dass der längsgestreckte Körper zwei Endbereiche aufweist, wobei zumindest an einem Endbereich eine sacklochartige Ausnehmung angeordnet ist. Die sacklochartige Ausnehmung ist im Gegensatz zur vollausgeformten Ausnehmung nicht komplett vom Material des längsgestreckten Körpers umgeben, d.h. sie ist in einem Bereich nicht geschlossen, also komplett umrandet, ausgebildet und direkt an einer Seitenkante positioniert, so dass die Seitenkante durch die sacklochartige Ausnehmung unterbrochen wird.

Eine vorteilhafte Ausführungsform des erfindungsgemäßen toleranzausgleichenden Kontaktierungselements kann darin bestehen, dass ein längsgestreckter Körper zwei sacklochartige Ausnehmungen an den Endbereichen aufweist, wobei die sachlochartigen Ausnehmungen im 90° Winkel zueinander angeordnet sind.

Es entspricht einer speziellen Ausführungsform des erfindungsgemäßen toleranzausgleichenden Kontaktierungselements, dass das toleranzausgleichende Kontaktierungselement einteilig oder mehrteilig ausgebildet ist. Das toleranzausgleichende Kontaktierungselement kann beispielsweise elektrische Kontaktierungsstellen aufweisen, an welche ein weiteres Verbindungsstück anzuschließen ist, wenn die speziellen Bauräume dies erfordern.

Eine Fortführung des Konzepts für das erfindungsgemäße toleranzausgleichende Kontaktierungselement kann darin bestehen, dass die Kontaktierung der Stromschienen mittels der vollausgeformten Ausnehmung in unterschiedlichen Ebenen auszuführen ist. Die Kontaktierung in unterschiedlichen Ebenen wird durch eine Erweiterung der vollausgeformten Ausnehmung um horizontale und/oder vertikale Bereiche erreicht. Die vollausgeformte Ausnehmung ist auch in dieser Ausführungsform in einer Ebene ausgebildet und im Vergleich zu einem Langloch nur um weitere Durchgriffsbereiche ergänzt. Es liegt weiterhin eine einzige vollausgeformte Ausnehmung vor.

Die Aufgabe der vorliegenden Erfindung wird außerdem gelöst durch eine Stromschiene in Form eines toleranzausgleichenden Kontaktierungselements, um Stromschienen miteinander zu kontaktieren, aufweisend einen längsgestreckten Körper mit einer vollausgeformten Ausnehmung.

Zudem wird die Aufgabe gelöst durch eine Anordnung mit einem toleranzausgleichenden Kontaktierungselement, um Stromschienen miteinander zu kontaktieren, aufweisend einen längsgestreckten Körper mit einer vollausgeformten Ausnehmung.

Das erfindungsgemäße toleranzausgleichende Kontaktierungselement weist eine vollausgeformte Ausnehmung sowie eine in dieser Ausnehmung frei verschiebbare Klemme auf. Die vollausgeformte Ausnehmung kann als einfaches Langloch ausgebildet sein, welches parallel zu den Längs- oder Querkanten des längsgestreckten Körpers ausgebildet ist, oder nicht parallel zu den Längskanten ausgerichtet sein. Im Fall einer parallelen Ausrichtung kann das Langloch, vorzugsweise zusätzlich vertikal ausgerichtete Durchgriffserweiterungen, aufweisen. Im Fall einer nicht parallelen Ausrichtung des Langlochs können vorzugsweise zusätzliche horizontal ausgerichtete Durchgriffsöffnungen die Ausnehmung des Langlochs erweitern, so dass eine einzige vollausgeformte Ausnehmung ausgebildet wird. Die Stromschienen können durch die verschiebbare Klemme entweder horizontal, also in x-Richtung, oder vertikal, also in y-Richtung, fixiert werden.

Weitere Ausführungen und Vorteile der Erfindung werden nachfolgend anhand von Ausführungsbeispielen sowie anhand der Zeichnung erläutert.

Dabei zeigt:
Fig. 1 in einer perspektivischen Darstellung ein erstes Ausführungsbeispiel einer Anordnung aus zwei in einer Ebene ineinandergefügten erfindungsgemäßen toleranzausgleichenden Kontaktierungselementen;
Fig. 2 in einer perspektivischen Darstellung ein zweites Ausführungsbeispiel einer Anordnung aus zwei in zwei Ebenen ineinandergefügten erfindungsgemäßen toleranzausgleichenden Kontaktierungselementen;
Fig. 3 in einer perspektivischen Darstellung ein drittes Ausführungsbeispiel einer Anordnung aus zwei in zwei Ebenen ineinandergefügten erfindungsgemäßen toleranzausgleichenden Kontaktierungselementen mit einer Eckverbindung;
Fig. 4 in einer perspektivischen Darstellung ein Ausschnitt eines erfindungsgemäßen toleranzausgleichenden Kontaktierungselements mit einer vollausgeformten Ausnehmung mit zusätzlichen vertikal angeordneten Durchgriffsöffnungen;
Fig. 5 in einer perspektivischen Darstellung ein Ausschnitt eines erfindungsgemäßen toleranzausgleichenden Kontaktierungselements mit einer vollausgeformten Ausnehmung mit zusätzlichen horizontal angeordneten Durchgriffsöffnungen.

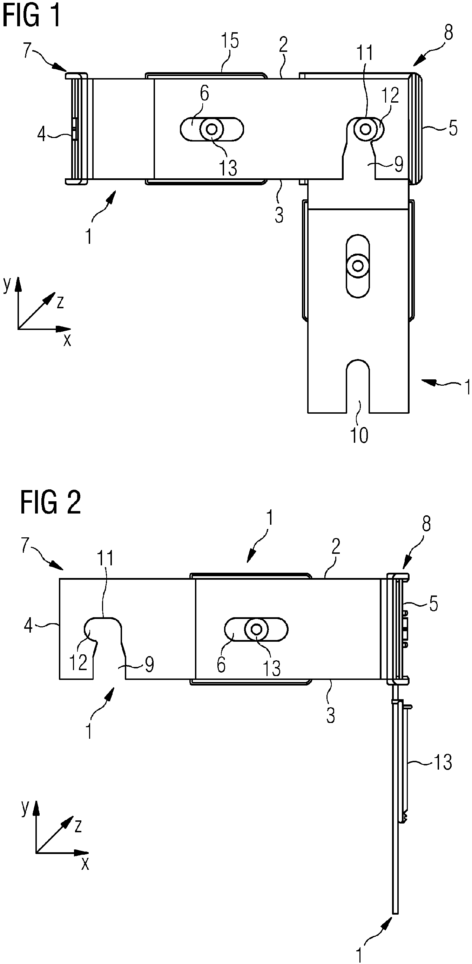

Fig. 1 zeigt ein erstes Ausführungsbeispiel einer Anordnung aus zwei in einer Ebene ineinandergefügten erfindungsgemäßen toleranzausgleichenden Kontaktierungselementen 1. Das toleranzausgleichende Kontaktierungselement 1 ist als längsgestreckter Körper ausgebildet, vorzugsweise als Stromschienenabschnitt, mit zwei sich parallel und positionsgleich gegenüberliegenden Längskanten 2, 3 und zwei sich parallel und positionsgleich gegenüberliegenden Querkanten 4, 5, welche miteinander im 90° Winkel verbunden sind. Innerhalb des längsgestreckten Körpers ist eine vollausgeformte bzw. komplett vom Material des längsgestreckten Körpers umgebende Ausnehmung 6 angeordnet, welche vorzugsweise als Langloch und parallel zu den Längskanten 2, 3 ausgebildet ist. Der längsgestreckte Körper weist zwei Endbereiche 7, 8 auf, an welchen die Querkanten 4, 5 verlaufen. Zumindest an einem Endbereich 7, 8 des längsgestreckten Körpers kann beginnend an einer Längskante 2, 3 eine sacklochartige Ausnehmung 9 angeordnet sein. Zudem ist es möglich, dass beginnend an einer der Querkanten 4, 5 eine sacklochartige Ausnehmung 10 positioniert ist. Diese sacklochartigen Ausnehmungen 9, 10 können vorzugsweise in einem 90° Winkel zueinander angeordnet sein. Diese sacklochartigen Ausnehmungen 9, 10 dienen dem Anschluss von Stromschienen, vorzugsweise kann die sacklochartige Ausnehmung am Bodenbereich 11 eine verbreiternde Ausnehmung 12 aufweisen, welche einen Toleranzbereich für den Anschluss der Stromschienen ausbildet.
Die Ausnehmung 6 stellt den ersten Teil des toleranzausgleichenden Kontaktierungselements dar. Der zweite Teil ist in Form einer Klemme 13 ausgebildet, die innerhalb der Ausnehmung 6 frei verschiebbar zu bewegen ist und jede Position einnehmen kann. Die Klemme 13 dient als Verbindungsstück zu den Stromschienen und fixiert diese vorzugsweise über eine Schraub- oder Bolzenverbindung aneinander. An der Klemme 13 ist eine Isolierplatte 15 angeordnet. Im Anschluss an diese Isolierplatte 15 folgen dann vorzugsweise zwei Schienen und eine weitere Isolierplatte 15. Diese Anordnung wiederholt sich dann.

Das erste Ausführungsbeispiel zeigt eine erfindungsgemäße Anordnung zweier erfindungsgemäßer toleranzausgleichender Kontaktierungselemente in einer Ebene, welche vorzugsweise in einem 90° Winkel zueinander angeordnet sind.

In Fig. 2 ist ein zweites Ausführungsbeispiel einer erfindungsgemäßen Anordnung aus zwei in zwei Ebenen ineinandergefügten erfindungsgemäßen toleranzausgleichenden Kontaktierungselementen 1 dargestellt. Die toleranzausgleichenden Kontaktierungselemente 1 stehen in einem vorzugsweise 90° Winkel in zwei Ebenen, xy-Ebene und yz-Ebene zueinander.

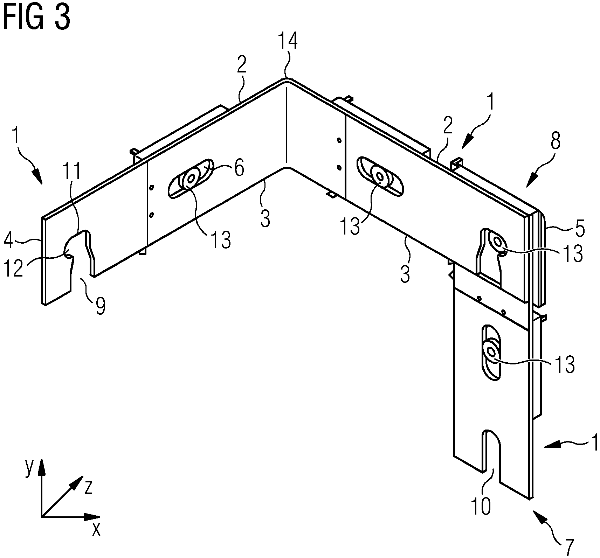

Fig. 3 zeigt ein drittes Ausführungsbeispiel einer Anordnung aus zwei oder drei in zwei Ebenen ineinandergefügten erfindungsgemäßen toleranzausgleichenden Kontaktierungselementen 1 mit einer Eckverbindung. Das toleranzausgleichende Kontaktierungselement 1 mit Eckverbindung 14 kann einteilig oder mehrteilig ausgebildet sein. Bei einer mehrteiligen Ausbildung werden die einzelnen toleranzausgleichenden Kontaktierungselemente 1 beispielsweise in der Eckverbindung 14 ineinandergefügt und mittels Schraub- oder Bolzenverbindung miteinander verbunden. Die toleranzausgleichenden Kontaktierungselemente 1 sind vorzugsweise im 90° Winkel zueinander angeordnet und befinden sich, wenn man diese Anordnung in einem Koordinatensystem anordnet, in der xy-Ebene und in der yz-Ebene.

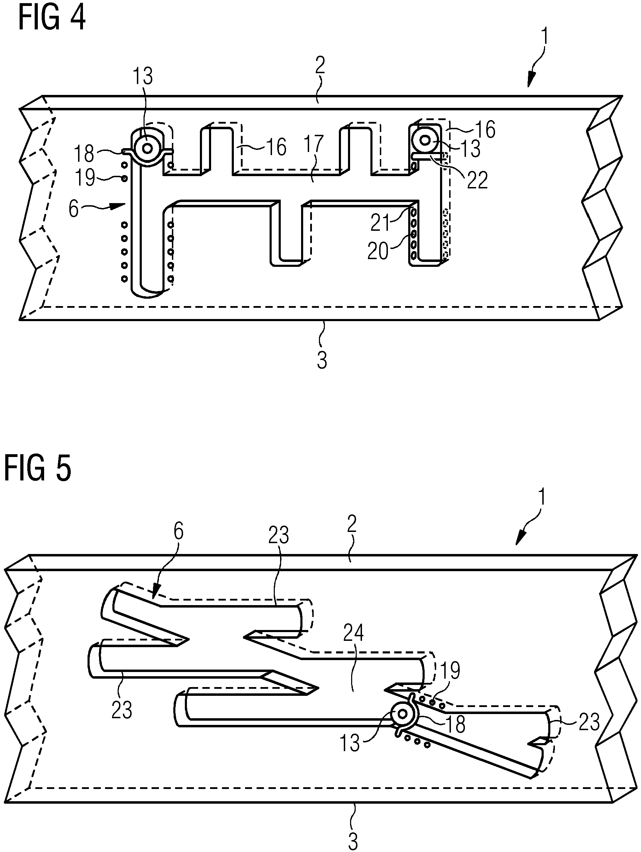

In Fig. 4 ist ein Ausschnitt eines erfindungsgemäßen toleranzausgleichenden Kontaktierungselements 1 mit einer vollausgeformten Ausnehmung 6 mit zusätzlichen vertikal angeordneten Durchgriffsöffnungen 16 dargestellt. Die vollausgeformte Ausnehmung 6 weist einen Langlochbereich 17 auf, welcher parallel zu den Längskanten 2, 3 angeordnet ist. Von diesem Langlochbereich 17 verzweigen sich entweder versetzt oder oberhalb und unterhalb vom Langlochbereich 17 positionsgleich angeordnete Durchgriffsöffnungen 16. Zur festen Fixierung der Klemmen 13 in den Konturen des vollausgeformten Ausnehmung 6 können Fixierungsklemmen 18 vorgesehen sein, welche über ihre Enden in seitlich an den vertikalen Durchgriffsöffnungen 16 angeordneten Löchern 19 einzuhaken sind. Eine andere Fixierungsmöglichkeit für die Klemmen 13 besteht darin, dass Löcher 20 an den Innenseiten 21 der vertikalen Durchgriffsöffnungen 16 gestanzt werden und ein Bolzen 22 in gegenüberliegende Löcher eingeführt wird.

Fig. 5 zeigt einen Ausschnitt eines erfindungsgemäßen toleranzausgleichenden Kontaktierungselements 1 mit einer vollausgeformten Ausnehmung 6 mit zusätzlichen horizontal angeordneten Durchgriffsöffnungen 23, welche ebenfalls wie die Durchgriffsöffnungen 16 Teilbereiche der vollausgeformten Ausnehmung 6 darstellen. Die vollausgeformte Ausnehmung 6 weist einen Langlochbereich 24 auf, welcher nicht parallel zu den Längskanten 2, 3 angeordnet ist. Von diesem Langlochbereich 24 verzweigen sich entweder versetzt oder positionsgleich gegenüberliegend vom Langloch 24 angeordnete Durchgriffsöffnungen 23. Zur festen Fixierung der Klemmen 13 in den Konturen des vollausgeformten Ausnehmung 6 können Fixierungsklemmen 18 vorgesehen sein, welche über ihre Enden in seitlich an den vertikalen Durchgriffsöffnungen 23 angeordneten Löchern 19 einzuhaken sind.

Das erfindungsgemäße toleranzausgleichende Kontaktierungselement für miteinander zu kontaktierende Stromschienen zeichnet sich dadurch, dass der Montageaufwand für die Installation von miteinander zu verbindenden Stromschienen-Plattformen reduziert wird und ein mehrdimensional ausgebildeterer Toleranzbereich innerhalb einer Stromschiene implementiert wird.

### Bezugszeichenliste

- 1: Toleranzausgleichendes Kontaktierungselement
- 2: Längskante
- 3: Längskante
- 4: Querkante
- 5: Querkante
- 6: Ausnehmung
- 7: Endbereich
- 8: Endbereich
- 9: Sacklochartige Ausnehmung
- 10: Sacklochartige Ausnehmung
- 11: Bodenbereich der sacklochartigen Ausnehmung
- 12: Verbreiternde Ausnehmung innerhalb der sacklochartigen Ausnehmung
- 13: Klemme
- 14: Eckverbindung
- 15: Isolierplatte
- 16: Durchgriffsöffnungen
- 17: Langlochbereich
- 18: Fixierungsklemme
- 19: Loch
- 20: Loch
- 21: Innenseite
- 22: Bolzen
- 23: Durchgriffsöffnungen
- 24: Langlochbereich

## Patentansprüche

1. Toleranzausgleichendes Kontaktierungselement (1), um Stromschienen miteinander zu kontaktieren, aufweisend einen längsgestreckten Körper mit einer vollausgeformten Ausnehmung (6).

2. Toleranzausgleichendes Kontaktierungselement (1) nach Anspruch 1, **dadurch gekennzeichnet, dass** die vollausgeformte Ausnehmung (6) als einfaches Langloch oder als Langloch mit vertikalen und/oder horizontalen Durchgriffsöffnungen (16, 23) ausgebildet ist.

3. Toleranzausgleichendes Kontaktierungselement (1) nach Anspruch 1 oder 2, **dadurch gekennzeichnet, dass** in der vollausgeformten Ausnehmung (6) eine Klemme (13) für die Fixierung von Stromschienen frei verschiebbar angeordnet ist.

4. Toleranzausgleichendes Kontaktierungselement (1) nach einem der Ansprüche 1 bis 3, **dadurch gekennzeichnet, dass** der längsgestreckte Körper als Stromschienenabschnitt ausgebildet ist.

5. Toleranzausgleichendes Kontaktierungselement (1) nach einem der Ansprüche 1 bis 4, **dadurch gekennzeichnet, dass** der längsgestreckte Körper zwei Endbereiche (7, 8) aufweist, wobei zumindest an einem Endbereich (7, 8) eine sacklochartige Ausnehmung (9, 10) angeordnet ist.

6. Toleranzausgleichendes Kontaktierungselement (1) nach Anspruch 1 der 5, **dadurch gekennzeichnet, dass** ein längsgestreckter Körper zwei sacklochartige Ausnehmungen (9, 10) an den Endbereichen (7, 8) aufweist, wobei die sacklochartigen Ausnehmungen (9, 10) im 90° Winkel zueinander angeordnet sind.

7. Toleranzausgleichendes Kontaktierungselement (1) nach einem der Ansprüche 1 bis 6, **dadurch gekennzeichnet, dass** das toleranzausgleichende Kontaktierungselement (1) einteilig oder mehrteilig ausgebildet ist.

8. Toleranzausgleichendes Kontaktierungselement (1) nach einem der Anspruch 1 bis 4, **dadurch gekennzeichnet, dass** die Kontaktierung der Stromschienen mittels der vollausgeformten Ausnehmung (6) in unterschiedlichen Ebenen auszuführen ist.

9. Stromschiene in Form eines toleranzausgleichenden Kontaktierungselements (1), um Stromschienen miteinander zu kontaktieren, aufweisend einen längsgestreckten Körper mit einer vollausgeformten Ausnehmung (6).

10. Anordnung mit einem toleranzausgleichenden Kontaktierungselement (1), um Stromschienen miteinander zu kontaktieren, aufweisend einen längsgestreckten Körper mit einer vollausgeformten Ausnehmung (6).
